# EUROPEAN PATENT APPLICATION

(11) **EP 4 738 811 A1**
(43) Date of publication of application: **06.05.2026**
(21) Application number: 25212497.9
(22) Date of filing: 30.10.2025
(51) Int. Cl.: H04N 7/18

(54) **METHODS AND APPARATUSES FOR VISUALIZING AUDIO DATA IN A SURVEILLANCE SYSTEM**

(30) Priority: 01.11.2024 US 202418935342
(71) Applicant: Tyco Fire & Security GmbH, 8212 Neuhausen am Rheinfall (CH)
(72) Inventor: SAMPLE, Benjamin, Fishers, Indiana (US); AGBOOLA, Akinboluwaji, Fishers, Indiana (US); MALANKAR, Shariwa Ravindra, Fishers, Indiana (US); PATNI, Darshan Ajit, Fishers, Indiana (US); CHANDRA, Sowmya, Fishers, Indiana (US)
(74) Representative: Meissner Bolte Nürnberg

(57) **Abstract**

Aspects of the present disclosure include a method, a server, and/or a non-transitory computer readable medium for receiving a plurality of images from a plurality of cameras monitoring the site, receiving a plurality of sounds from a plurality of microphones, synchronizing the plurality of images and the plurality of sounds based on first timestamps associated with the plurality of images and second timestamps associated with the plurality of sounds, providing a graphical user interface to display a representation of the plurality of sounds and the plurality of images, and providing a control for selecting at least one portion of the plurality of sounds via the graphical user interface.

## Description

### BACKGROUND

Surveillance cameras are frequently used to monitor a site such as event venues, commercial buildings, industrial sites, and/or residential houses. However, it may be costly and/or impractical for surveillance cameras to capture images of the entire site. Audio data collected from microphones may provide additional information to personnel monitoring a site. However, it is not clear how to effectively use audio data to supplement and/or enhance a surveillance system. Therefore, improvements are desired.

### SUMMARY

This summary is provided to introduce a selection of concepts in a simplified form that are further described below, in particular in the DETAILED DESCRIPTION. This summary is not intended to identify key features of the claimed subject matter, nor is it intended to be used as an aid in determining the scope of the claimed subject matter. Embodiments according to the invention are disclosed in particular in the appended claims.

Aspects of the present disclosure include a method, a server, and/or a non-transitory computer readable medium for receiving a plurality of images from a plurality of cameras monitoring the site, receiving a plurality of sounds from a plurality of microphones, synchronizing the plurality of images and the plurality of sounds based on first timestamps associated with the plurality of images and second timestamps associated with the plurality of sounds, providing a graphical user interface to display a representation of the plurality of sounds and the plurality of images, and providing a control for selecting at least one portion of the plurality of sounds via the graphical user interface.

### BRIEF DESCRIPTION OF THE DRAWINGS

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 illustrates an example of an environment for monitoring a site according to aspects of the present disclosure.
FIG. 2 illustrates a first graphical user interface in accordance with aspects of the present disclosure.
FIG. 3 illustrates a second graphical user interface in accordance with aspects of the present disclosure.
FIG. 4 illustrates an example of a computer system in accordance with aspects of the present disclosure.
FIG. 5 illustrates a method of monitoring a site according to aspects of the present disclosure.

### DETAILED DESCRIPTION

Aspects of the present disclosure include augmenting surveillance images with synchronized audio data. Specifically, the audio data may be displayed to show the corresponding sound intensity as a function of time. As such, a security personnel reviewing the surveillance images may be able to quickly locate a time associated with an elevated sound intensity and the corresponding surveillance images or videos.

In particular aspects of the present disclosure, cameras may have microphones. As such, audio data may be examined when considering the historical events that have been captured by a given security camera. There could be sounds occurring off-frame of the camera that a user (e.g., a security personnel) is unaware of until he or she actually plays back footage from that point in time, unbeknownst to them to whether or not there is actually audio until the video is playing. Consequently, aspects of the current disclosure may provide additional insights to surveillance images.

Security cameras will often have microphones to capture audio. These audio streams are sent to the Network Video Recorder (NVR) independently of the video stream. Additionally, audio streams from different devices can also be consumed from the NVR and be associated with the security footage of a camera. This audio is data that can be represented over time, using different unique data points. One aspect of the present disclosure includes measuring frequency and amplitude of the audio stream and show that as a graph over time. This graph may be displayed on a timeline in parallel to the video, which then gives an end user an additional data point to consider when viewing their timeline of events.

For example, there may be a camera facing the entrance to a building. Simultaneously, there is an attack happening in the alley around the corner and people are screaming. As such, images alone may be insufficient to alert a user about the attack in the alley. On the contrary, the proposed solution may allow the user to see the data that shows a person is screaming despite there being no video from the security camera itself. Additionally, it alerts the user to potential footage that could be relevant to criminal investigations.

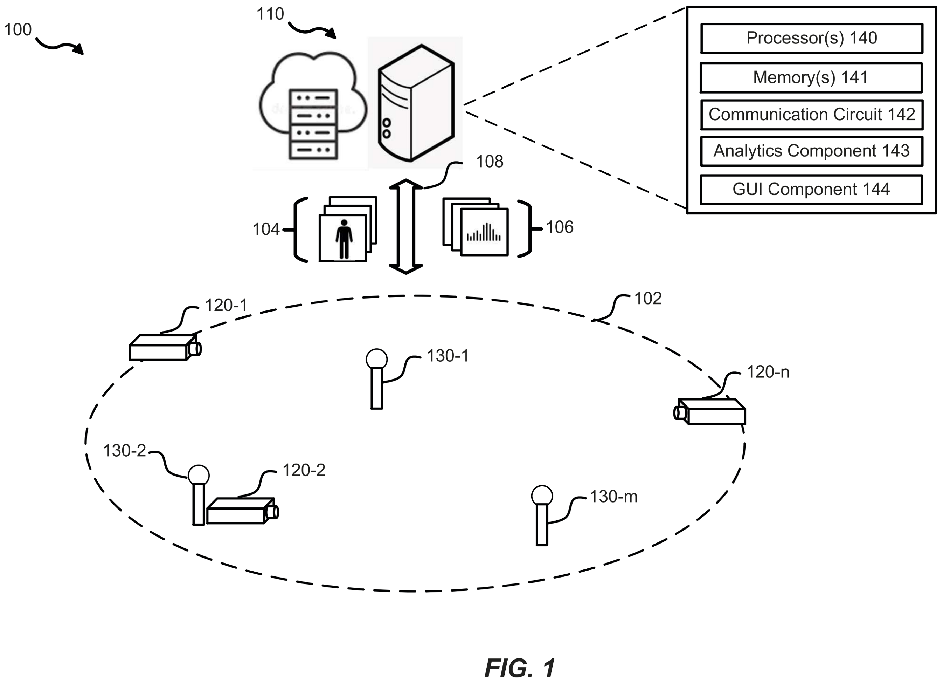

FIG. 1 illustrates an example of an environment 100 for implementing integrated audio data in a surveillance system according to aspects of the present disclosure. In some aspects of the present disclosure, the environment 100 may include a server 110. The server 110 may be implemented as a physical system, a virtual system, or a combination thereof. The server 110 may be implemented as a single server or a plurality of servers. In one aspect, the server may be a NVR. The server 110 may include one or more processors 140 configured to execute instructions stored in one or more memories 141. The server 110 may include one or more memories 141 configured to store instructions that, when executed, implement various aspects of the present disclosure. The server 110 may include one or more communication circuits 142 configured to transmit and/or receive information, such as images, audio data, and/or other control or data information. The server 110 may include an analytic component 143 configured to synchronize, analyze, store, and/or load/unload images and/or audio data. The server 110 may include a graphical user interface (GUI) component 144 configured to display audio data with synchronized images. From hereinafter, the term images include still frames images and videos.

In certain aspects of the present disclosure, the environment 100 may include a plurality of cameras 120-1, 120-2... 120-n disposed throughout a site 102. Here, n may be any integer greater than zero. The site 102 may be a sport venue, a concert hall, a commercial building, an industrial warehouse, a factory, a residential home, or other sites that may be monitored by the plurality of cameras 120-1, 120-2... 120-n. Each of the plurality of cameras 120-1, 120-2... 120-n may be configured to capture images 104 of the site 102. The plurality of cameras 120-1, 120-2... 120-n may be configured to transmit the captured images 104, as a single stream or multiple streams (e.g., one stream for each camera), to the server 110 via a communication link 108. The communication link 108 may be a wired or wireless channel that allows data transmission. For example, the communication link 108 may be a copper wire, a fiber optic cable, or the atmosphere.

In some aspects, the environment 100 may include a plurality of microphones 130-1, 130-2... 130-m configured to record sounds 106 associated with the site 102. Here, *m* may be any integer larger than zero. The plurality of microphones 130-1, 130-2... 130-m may include standalone microphones and/or integrated microphones that are part of the cameras described above. The plurality of microphones 130-1, 130-2... 130-m may be configured to transmit the recorded sounds 106, as a single stream or multiple streams (e.g., one stream for each microphone), to the server 110 via the communication link 108. Further, the plurality of microphones 130-1, 130-2... 130-m may be configured to transmit the recorded sounds 106 as separate streams from the captured images 104.

Here, each of the plurality of cameras 120-1, 120-2... 120-n and/or the plurality of microphones 130-1, 130-2... 130-m may include communication hardware and/or software configured to transmit visual and/or audio data. In other aspects, each of the plurality of cameras 120-1, 120-2... 120-n and/or the plurality of microphones 130-1, 130-2... 130-m may be connected to one or more devices configured to transmit visual and/or audio data. In some instances, a camera may include a microphone, and may be configured to transmit both the visual and audio data.

During normal operations, in some aspects of the present disclosure, the plurality of cameras 120-1, 120-2... 120-n may be disposed at various locations throughout the site 102 to monitor the sites. Specifically, the plurality of cameras 120-1, 120-2... 120-n may capture the images 104 of the site 102, and transmit the images 104, via the communication link 108, to the server 110. Each image of the images 104 may be transmitted with information such as one or more of a timestamp indicating the time the corresponding image was captured, encryption information (if any), location information associated with captured image, an identifier associated with the camera that captured the image, image quality information (e.g., resolution, colors, etc.), and/or other suitable information.

In one aspect, the plurality of microphones 130-1, 130-2... 130-m may be disposed at various locations throughout the site 102. The plurality of microphones 130-1, 130-2... 130-m may be disposed at the same and/or different locations as the plurality of cameras 120-1, 120-2... 120-n. The plurality of microphones 130-1, 130-2... 130-m may record the sounds 106 of the site 102 and transmit the sounds 106, via the communication link 108, to the server 110. Each of the sounds 106 may be transmitted with information such as one or more of a timestamp indicating the time the corresponding sound was recorded, encryption information (if any), location information associated with recorded sound, an identifier associated with the microphone that recorded the sound, audio quality information (e.g., clarity, sample rate, etc.), and/or other suitable information.

In some aspects, the communication circuit 142 of the server 110 may receive the images 104 and the sounds 106 via the communication link 108. The analytics component 143 may align the images 104 and the sounds 106 temporally using the associated time stamps. Further, the analytics component 143 may extract the intensity (measured in decibels (dB)) and/or frequencies (measured in hertz (Hz)) of the sounds 106.

In one aspect of the present disclosure, the GUI component 144 may display the intensity of the sounds 106 (over all frequencies or one or more extracted frequencies) as a function of time (as discussed in more detail below). Specifically, the GUI component 144 may display the intensity of the sounds 106 as integrated from some or all of the plurality of microphones 130-1, 130-2... 130-m. In some cases, the GUI component 144 may display the intensity of a portion of the sounds 106 from one microphone.

In other aspects, the GUI component 144 may provide a control (e.g., a slide bar, a selection window, etc.) for a user to select a sound or a segment of sounds 106. The GUI component 144 may receive the selection via the control. In response to receiving the selection, the analytics component 143 may identify the images associated with the selected sound(s) and present the identified images via the GUI component 144.

In certain aspects of the present disclosure, in response to the selection of the sound or segment, the analytics component 143 may identify images that were captured contemporaneously as the selected sound/segment. In other aspects, the analytics component 143 may identify images that were captured contemporaneously as the selected sound/segment and captured by the camera(s) closest to the microphone that recorded the selected sound/segment. In yet another example, the analytics component 143 may identify images that were captured contemporaneously as the selected sound/segment and captured by camera(s) at the ingress and/or egress of the site 102. In one example, the analytics component 143 may identify images may identify images that were captured from 0 to up to *k* seconds/minutes before the recording of the selected sound/segment (where *k* is a positive integer). In an example, the analytics component 143 may identify images may identify images that were captured from 0 to up to *l* seconds/minutes after the recording of the selected sound/segment (where *l* is a positive integer). Other image selection rules, including but not limited to the rules described above, may also be implemented according to aspects of the present disclosure.

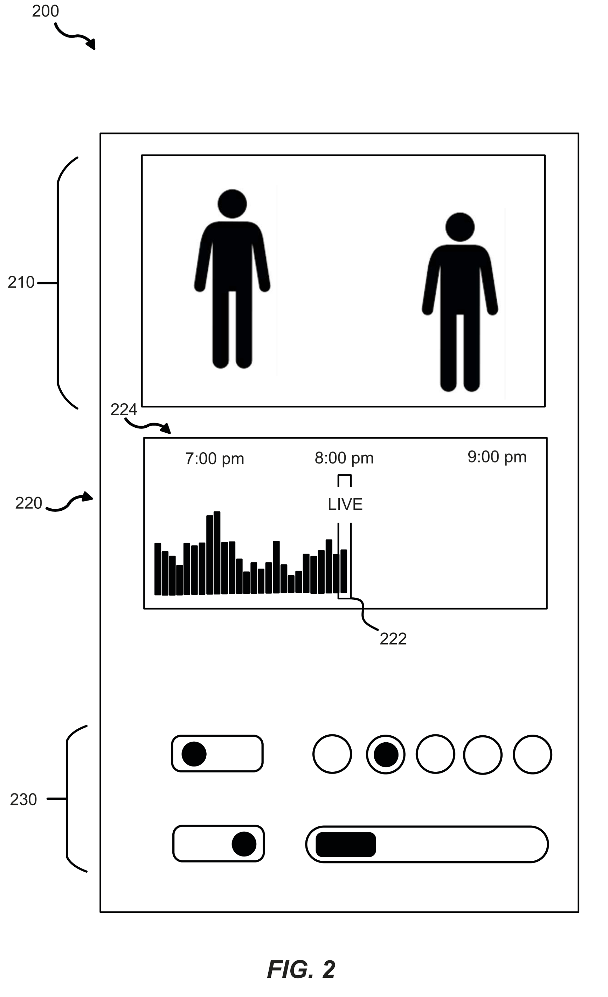

FIG. 2 shows an example of a first GUI 200 as provided by the GUI component 144 of the server 110 (FIG. 1). Here, the GUI component 144 may send the first GUI 200 to a device (e.g., a computer, a mobile device, a personal digital computer, a laptop computer, a tablet computer, etc.) for displaying to a user. In some aspects of the present disclosure, the first GUI 200 may include a video window 210 displaying a current image of the images 104 associated with a camera of the plurality of cameras 120-1, 120-2... 120-n. The first GUI 200 may include an audio window 220 displaying a representation of at least a portion of the sounds 106 recorded by the plurality of microphones 130-1, 130-2... 130-m. The representation may include the audio intensity of the sounds 106. For example, the longer the bar, the higher the audio intensity of the sounds 106. Specifically, the audio window 220 may show the sounds 106 (or the representation) from before 7:00 pm (approximately 6:30 pm) to the current time (shown as "LIVE" or approximately 8:00 pm). The audio window 220 may include a time bar 224 showing the lapse time associated with the sounds 106. In one aspect of the present disclosure, the audio window 220 may include a control 222 configured to select a sound and/or a segment of the sounds 106.

In some aspects, the first GUI 200 may include one or more additional controls 230 configured to control the operations of one or more of the plurality of cameras 120-1, 120-2... 120-n, one or more of the plurality of microphones 130-1, 130-2... 130-m, alarms, and/or other devices within the site 102. The one or more additional controls 230 may be used to activate or deactivate a camera, control the pan, tilt, zoom of a camera, activate or deactivate a microphone, activate or deactivate an alarm, etc.

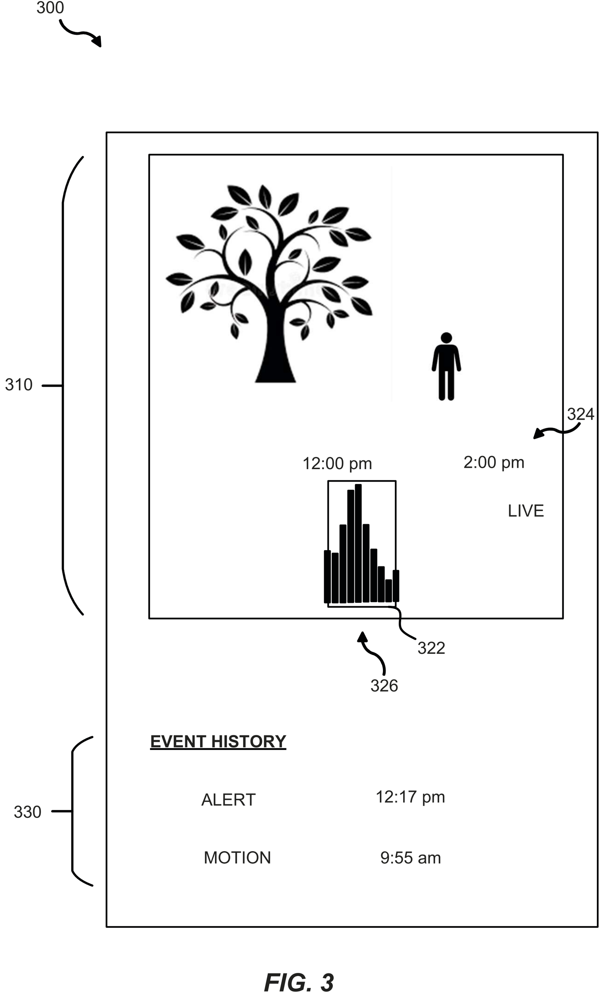

FIG. 3 shows an example of a second GUI 300 as provided by the GUI component 144 of the server 110 (FIG. 1). In some aspects of the present disclosure, the analytics component 143 may extract a particular frequency of interest from the sounds 106, such a 556 Hz (frequency of glass breaking). The GUI component 144 may generate visual information showing the intensity of the sounds 106 at the extracted frequency as a function of time. Here, the GUI component 144 may send the second GUI 300 to a device (e.g., a computer, a mobile device, a personal digital computer, a laptop computer, a tablet computer, etc.) for displaying to a user. The second GUI 300 may include a window 310 displaying both an image of the images 104 associated with a selected sound or segment and a representation of at least a portion of the sounds 106 recorded by the plurality of microphones 130-1, 130-2... 130-m. Here, a single window may be used to display the visual and audio information. The representation may include the audio intensity of the sounds 106. The window 310 may include a time bar 324 showing the lapse time associated with the sounds 106. In one aspect of the present disclosure, the audio window 220 may include a control 322 configured to select a sound and/or a segment of the sounds 106. The control 322 may be a slider configured to slide to a sound and/or a segment of the sounds 106.

In FIG. 3, the control 322 is selecting a segment 326 of sounds 106 after 12:00 pm. The segment 326 may indicate an elevated (higher than a threshold or determined visually by the user) sound at 556 Hz, indicating a potential window has been broke as shown in the segment 326 of sounds 106. As such, the control 322 may be used to select the segment 326. In response to the selection, the video window 310 may display images associated with the segment 326. For example, the video window 310 may show images captured by cameras around the microphone that recorded the segment 326. The images may come from one camera or multiple cameras (i.e., multiple views).

In some aspects, the second GUI 300 may include an event history 330 indicating pass event, such as an alert at 12:17 pm (associated with the window breaking event of the segment 326), a motion detection at 9:55 am as detected by one or more of the plurality of cameras 120-1, 120-2... 120-n, maintenance reminders, alarms, and/or other events.

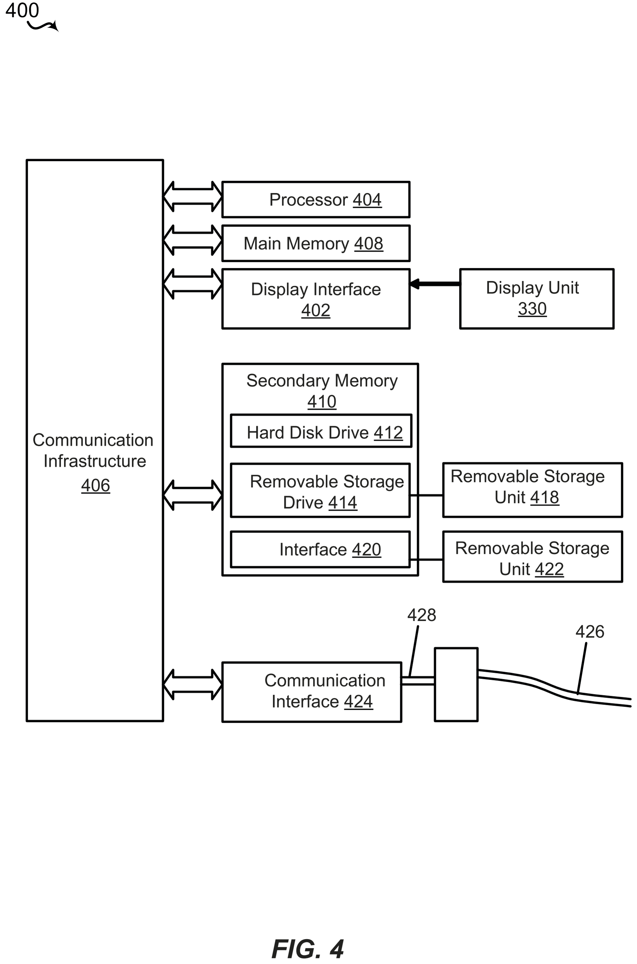

Aspects of the present disclosures, such as the server 110, may be implemented using hardware, software, or a combination thereof and may be implemented in one or more computer systems or other processing systems. In an aspect of the present disclosures, features are directed toward one or more computer systems capable of carrying out the functionality described herein. An example of such a computer system 400 is shown in FIG. 4. The server 110 may include some or all of the components of the computer system 400.

The computer system 400 includes one or more processors, such as processor 404. The processor 404 is connected with a communication infrastructure 406 (e.g., a communications bus, cross-over bar, or network). The term "bus," as used herein, can refer to an interconnected architecture that is operably connected to transfer data between computer components within a singular or multiple systems. The bus can be a memory bus, a memory controller, a peripheral bus, an external bus, a crossbar switch, and/or a local bus, among others. Various software aspects are described in terms of this example computer system. After reading this description, it will become apparent to a person skilled in the relevant art(s) how to implement aspects of the disclosures using other computer systems and/or architectures.

The computer system 400 may include a display interface 402 that forwards graphics, text, and other data from the communication infrastructure 406 (or from a frame buffer not shown) for display on a display unit 430. Computer system 400 also includes a main memory 408, preferably random access memory (RAM), and may also include a secondary memory 410. The secondary memory 410 may include, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. In some examples, one or more of the main memory 408, the secondary memory 410, the removable storage unit 418, and/or the removable storage unit 422 may be a non-transitory memory.

Alternative aspects of the present disclosures may include secondary memory 410 and may include other similar devices for allowing computer programs or other instructions to be loaded into computer system 400. Such devices may include, for example, a removable storage unit 422 and an interface 420. Examples of such may include a program cartridge and cartridge interface (such as that found in video game devices), a removable memory chip (such as an erasable programmable read only memory (EPROM), or programmable read only memory (PROM)) and associated socket, and other removable storage units 422 and interfaces 420, which allow software and data to be transferred from the removable storage unit 422 to computer system 400.

Computer system 400 may also include a communications interface 424. Communications interface 424 allows software and data to be transferred between computer system 400 and external devices. Examples of communications interface 424 may include a modem, a network interface (such as an Ethernet card), a communications port, a Personal Computer Memory Card International Association (PCMCIA) slot and card, etc. Software and data transferred via communications interface 424 are in the form of signals 428, which may be electronic, electromagnetic, optical or other signals capable of being received by communications interface 424. These signals 428 are provided to communications interface 424 via a communications path (e.g., channel) 426. This path 426 carries signals 428 and may be implemented using wire or cable, fiber optics, a telephone line, a cellular link, an RF link and/or other communications channels. In this document, the terms "computer program medium" and "computer usable medium" are used to refer generally to media such as a removable storage drive 418, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Computer programs may also be received via communications interface 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an aspect of the present disclosures where the method is implemented using software, the software may be stored in a computer program product and loaded into computer system 400 using removable storage drive 414, hard drive 412, or communications interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

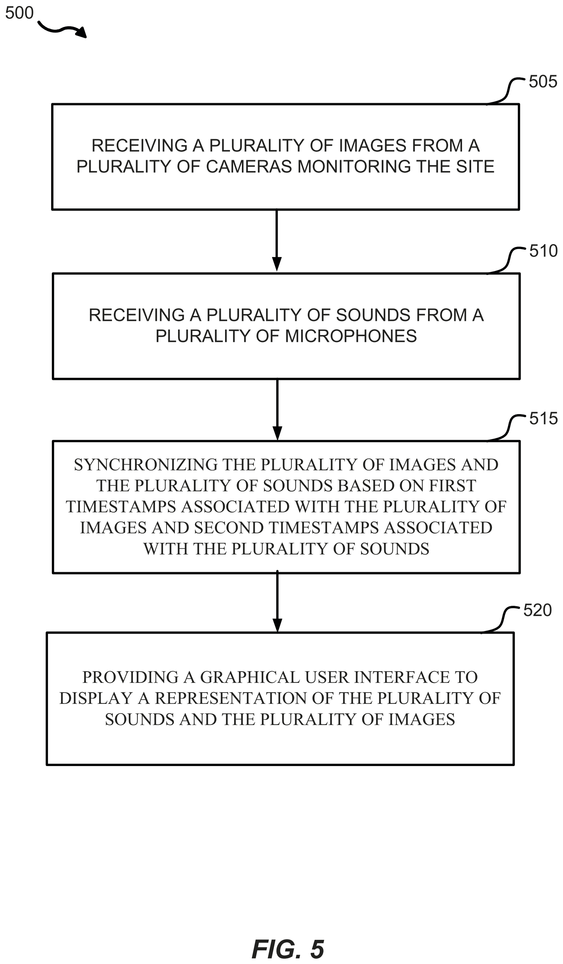

FIG. 5 illustrates a method of monitoring a site according to aspects of the present disclosure. A method 500 may be performed by the server 110, the computer system 400, and/or one or more subcomponents of the server 110 and/or the computer system 400.

At 505, the method 500 may receive a plurality of images from a plurality of cameras monitoring the site. For example, the one or more processors 140 and/or the communication circuit 142 may be configured to, and/or provide means for, receiving the images 104 from the plurality of cameras 120-1, 120-2... 120-n.

At 510, the method 500 may receive a plurality of sounds from a plurality of microphones. For example, the one or more processors 140 and/or the communication circuit 142 may be configured to, and/or provide means for, receiving the sounds 106 from the plurality of microphones 130-1, 130-2... 130-m.

At 515, the method 500 may synchronize the plurality of images and the plurality of sounds based on first timestamps associated with the plurality of images and second timestamps associated with the plurality of sounds. For example, the one or more processors 140 and/or the analytics component 143 may be configured to, and/or provide means for, synchronizing the images 104 and the sounds 106 using the timestamps of the images 104 and the sounds 106.

At 520, the method 500 may provide a graphical user interface to display a representation of the plurality of sounds and the plurality of images. For example, the one or more processors 140 and/or the GUI component 144 may be configured to, and/or provide means for, providing the first GUI 200 and/or the second GUI 300.

At 525, the method 500 may provide a control for selecting at least one portion of the plurality of sounds via the graphical user interface. For example, the one or more processors 140 and/or the GUI component 144 may be configured to, and/or provide means for, providing the control 222 and/or the control 322 for selecting a sound or a segment of the sounds 106.

Aspects of the present disclosure includes the method above, further comprising extracting first sounds at a first frequency from the plurality of sounds.

Aspects of the present disclosure includes any of the method above, wherein providing the graphical user interface to display the representation comprises displaying audio intensities of the first sounds.

Aspects of the present disclosure includes any of the method above, further comprising receiving, via the control, an indication for selecting the at least one portion of the plurality of sounds, identifying at least one image synchronized with the at least one portion of the plurality of sounds, and providing the at least one image to the graphical user interface for display.

Aspects of the present disclosure includes any of the method above, wherein providing the graphical user interface to display the representation comprises displaying audio intensities of at least a portion of the sounds.

Aspects of the present disclosure includes any of the method above, further comprising providing one or more of at least one control or an event history.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1. A server for monitoring a site, comprising:
one or more memories storing instructions therein;
one or more processors communicatively coupled with the one or more memories and configured to:
   receive a plurality of images from a plurality of cameras monitoring the site;
   receive a plurality of sounds from a plurality of microphones;
   synchronize the plurality of images and the plurality of sounds based on first timestamps associated with the plurality of images and second timestamps associated with the plurality of sounds;
   provide a graphical user interface to display a representation of the plurality of sounds and the plurality of images; and
   provide a control for selecting at least one portion of the plurality of sounds via the graphical user interface.

Embodiment 2. The server of Embodiment 1, wherein the one or more processors are further configured to extract first sounds at a first frequency from the plurality of sounds.

Embodiment 3. The server of Embodiment 2, wherein providing the graphical user interface to display the representation comprises displaying audio intensities of the first sounds.

Embodiment 4. The server of any of Embodiments 1 to 3, wherein the one or more processors are further configured to:
receive, via the control, an indication for selecting the at least one portion of the plurality of sounds; identify at least one image synchronized with the at least one portion of the plurality of sounds; and
provide the at least one image to the graphical user interface for display.

Embodiment 5. The server of any of Embodiments 1 to 4, wherein providing the graphical user interface to display the representation comprises displaying audio intensities of at least a portion of the sounds.

Embodiment 6. The server of any of Embodiments 1 to 5, wherein providing the graphical user interface to display the representation comprises:
averaging audio intensities of at least a portion of the sounds as an average intensity; and
displaying the average intensity.

Embodiment 7. The server of any of Embodiments 1 to 6, wherein the one or more processors are further configured to provide one or more of at least one control or an event history.

Embodiment 8. A surveillance system for monitoring a site, comprising:
a server configured to:
receive a plurality of images from a plurality of cameras monitoring the site;
receive a plurality of sounds from a plurality of microphones;
synchronize the plurality of images and the plurality of sounds based on first timestamps associated with the plurality of images and second timestamps associated with the plurality of sounds; provide a graphical user interface to display a representation of the plurality of sounds and the plurality of images; and
provide a control for selecting at least one portion of the plurality of sounds via the graphical user interface;
the plurality of cameras; and
the plurality of microphones.

Embodiment 9. The surveillance system of Embodiment 8, wherein the server is further configured to extract first sounds at a first frequency from the plurality of sounds.

Embodiment 10. The surveillance system of Embodiment 9, wherein providing the graphical user interface to display the representation comprises displaying audio intensities of the first sounds.

Embodiment 11. The surveillance system of Embodiment 10, wherein the server is further configured to:
receive, via the control, an indication for selecting the at least one portion of the plurality of sounds; identify at least one image synchronized with the at least one portion of the plurality of sounds; and
provide the at least one image to the graphical user interface for display.

Embodiment 12. The surveillance system of any of Embodiments 8 to 11, wherein providing the graphical user interface to display the representation comprises displaying audio intensities of at least a portion of the sounds.

Embodiment 13. The surveillance system of any of Embodiments 8 to 12, wherein providing the graphical user interface to display the representation comprises:
averaging audio intensities of at least a portion of the sounds as an average intensity; and
displaying the average intensity.

Embodiment 14. The surveillance system of any of Embodiments 8 to 13, wherein the server is further configured to provide one or more of at least one control or an event history.

Embodiment 15. A method for monitoring a site, comprising:
receiving a plurality of images from a plurality of cameras monitoring the site;
receiving a plurality of sounds from a plurality of microphones;
synchronizing the plurality of images and the plurality of sounds based on first timestamps associated with the plurality of images and second timestamps associated with the plurality of sounds;
providing a graphical user interface to display a representation of the plurality of sounds and the plurality of images; and
providing a control for selecting at least one portion of the plurality of sounds via the graphical user interface.

Embodiment 16. The method of Embodiment 15, further comprising extracting first sounds at a first frequency from the plurality of sounds.

Embodiment 17. The method of Embodiment 16, wherein providing the graphical user interface to display the representation comprises displaying audio intensities of the first sounds.

Embodiment 18. The method of any of Embodiments 15 to 17, further comprising:
receiving, via the control, an indication for selecting the at least one portion of the plurality of sounds;
identifying at least one image synchronized with the at least one portion of the plurality of sounds; and
providing the at least one image to the graphical user interface for display.

Embodiment 19. The method of any of Embodiments 15 to 18, wherein providing the graphical user interface to display the representation comprises displaying audio intensities of at least a portion of the sounds.

Embodiment 20. The method of any of claims 15 to 19, further comprising providing one or more of at least one control or an event history.

It will be appreciated that various implementations of the above-disclosed and other features and functions, or alternatives or varieties thereof, may be desirably combined into many other different systems or applications. Also, that various presently unforeseen or unanticipated alternatives, modifications, variations, or improvements therein may be subsequently made by those skilled in the art which are also intended to be encompassed by the following claims.

## Claims

1. A server for monitoring a site, comprising:
one or more memories storing instructions therein;
one or more processors communicatively coupled with the one or more memories and configured to:
receive a plurality of images from a plurality of cameras monitoring the site;
receive a plurality of sounds from a plurality of microphones;
synchronize the plurality of images and the plurality of sounds based on first timestamps associated with the plurality of images and second timestamps associated with the plurality of sounds;
provide a graphical user interface to display a representation of the plurality of sounds and the plurality of images; and
provide a control for selecting at least one portion of the plurality of sounds via the graphical user interface.

2. The server of claim 1, wherein the one or more processors are further configured to extract first sounds at a first frequency from the plurality of sounds;
optionally, wherein providing the graphical user interface to display the representation comprises displaying audio intensities of the first sounds.

3. The server of claim 1 or 2, wherein the one or more processors are further configured to:
receive, via the control, an indication for selecting the at least one portion of the plurality of sounds;
identify at least one image synchronized with the at least one portion of the plurality of sounds; and
provide the at least one image to the graphical user interface for display.

4. The server of any of claims 1 to 3, wherein providing the graphical user interface to display the representation comprises:
displaying audio intensities of at least a portion of the sounds; and/or
averaging audio intensities of at least a portion of the sounds as an average intensity; and displaying the average intensity.

5. The server of any of claims 1 to 4, wherein the one or more processors are further configured to provide one or more of at least one control or an event history.

6. A surveillance system for monitoring a site, comprising:
a server configured to:
receive a plurality of images from a plurality of cameras monitoring the site;
receive a plurality of sounds from a plurality of microphones;
synchronize the plurality of images and the plurality of sounds based on first timestamps associated with the plurality of images and second timestamps associated with the plurality of sounds;
provide a graphical user interface to display a representation of the plurality of sounds and the plurality of images; and
provide a control for selecting at least one portion of the plurality of sounds via the graphical user interface;
the plurality of cameras; and
the plurality of microphones.

7. The surveillance system of claim 6, wherein the server is further configured to extract first sounds at a first frequency from the plurality of sounds.

8. The surveillance system of claim 7, wherein providing the graphical user interface to display the representation comprises displaying audio intensities of the first sounds;
optionally, wherein the server is further configured to:
receive, via the control, an indication for selecting the at least one portion of the plurality of sounds;
identify at least one image synchronized with the at least one portion of the plurality of sounds; and
provide the at least one image to the graphical user interface for display.

9. The surveillance system of any of claims 6 to 8, wherein providing the graphical user interface to display the representation comprises:
displaying audio intensities of at least a portion of the sounds; and/or
averaging audio intensities of at least a portion of the sounds as an average intensity; and
displaying the average intensity.

10. The surveillance system of any of claims 6 to 9, wherein the server is further configured to provide one or more of at least one control or an event history.

11. A method for monitoring a site, comprising:
receiving a plurality of images from a plurality of cameras monitoring the site;
receiving a plurality of sounds from a plurality of microphones;
synchronizing the plurality of images and the plurality of sounds based on first timestamps associated with the plurality of images and second timestamps associated with the plurality of sounds;
providing a graphical user interface to display a representation of the plurality of sounds and the plurality of images; and
providing a control for selecting at least one portion of the plurality of sounds via the graphical user interface.

12. The method of claim 11, further comprising extracting first sounds at a first frequency from the plurality of sounds;
optionally, wherein providing the graphical user interface to display the representation comprises displaying audio intensities of the first sounds.

13. The method of claim 11 or 12, further comprising:
receiving, via the control, an indication for selecting the at least one portion of the plurality of sounds;
identifying at least one image synchronized with the at least one portion of the plurality of sounds; and
providing the at least one image to the graphical user interface for display.

14. The method of any of claims 11 to 13, wherein providing the graphical user interface to display the representation comprises displaying audio intensities of at least a portion of the sounds.

15. The method of any of claims 11 to 14, further comprising providing one or more of at least one control or an event history.
